**Europäisches Patentamt**

**European Patent Office**

**Office européen des brevets**

(19)

(11) Veröffentlichungsnummer : **0 039 907**
**B1**

(12) **EUROPÄISCHE PATENTSCHRIFT**

(45) Veröffentlichungstag der Patentschrift :
28.08.85

(21) Anmeldenummer : 81103463.6

(22) Anmeldetag : 07.05.81

(51) Int. Cl.⁴ : **F 24 J   3/00, F 02 C   6/10,
C 10 J   3/54**

(54) Verfahren zur Wärmeerzeugung unter Verwendung einer Wärmepumpe.

(30) Priorität : 14.05.80 DE 3018450

(43) Veröffentlichungstag der Anmeldung :
18.11.81 Patentblatt 81/46

(45) Bekanntmachung des Hinweises auf die Patenterteilung : 28.08.85 Patentblatt 85/35

(84) Benannte Vertragsstaaten :
**AT BE CH DE FR GB IT LI LU NL SE**

(56) Entgegenhaltungen :
**DE-A- 2 134 721
DE-A- 2 651 888
DE-A- 2 724 833
DE-A- 2 743 723
DE-A- 2 755 092
US-A- 2 471 123**

(73) Patentinhaber : **Bergwerksverband GmbH
Franz-Fischer-Weg 61
D-4300 Essen 13 (DE)**

(72) Erfinder : **Dibelius, Günther, Prof., Dr.-Ing.
Fichthang 11
D-5100 Aachen (DE)**
Erfinder : **Pitt, Reinhold, Dr.-Ing.
Muffeterweg 56
D-5100 Aachen (DE)**

# 0 039 907

**Beschreibung**

Gegenstand der Erfindung ist ein Verfahren gemäß dem ersten Teil des Anspruchs 1. Dabei findet der Wärmetransport von einer Wärmequelle mit begrenzter Maximal-Temperatur zu einem Wärmeverbraucher (wärmeaufnehmender Prozeß) mit noch höherer Temperatur mittels eines vorzugsweise im Kreislauf geführten, meist gasförmigen Wärmeträgers (Wärmeträgerfluid) statt.

In vielen Fällen ist einerseits die Temperatur, mit der Wärme von einer Wärmequelle abgegeben werden kann, nach oben begrenzt (z. B. bei chemischen oder nuklearen Reaktionen oder durch die Warmsfestigkeit der Werkstoffe für die Wärmetauscher), andererseits ist oft für einen Wärmeverbraucher die Temperatur, mit der die Wärme zugeführt wird, von großer Bedeutung (z. B. bei Kohlevergasungsprozessen oder bei endothermen chemischen Reaktionen). Eine solche Temperaturbegrenzung nach oben hat für den Wärmeverbraucher den Nachteil, daß die Reaktionsgeschwindigkeit der wärmeaufnehmenden Reaktion gehemmt wird. Dann muß entweder der Reaktor für diese Reaktion größer gebaut werden, oder es muß eine Leistungsminderung in Kauf genommen werden. Es ist daher anzustreben, die Temperatur der wärmeaufnehmenden Reaktion anzuheben, was aber — wie nachfolgend gezeigt wird — nicht gerade einfach ist. Es ist nämlich durchaus üblich, Wärme aus einer Wärmequelle an einen gasförmigen Wärmeträger zu übertragen, um sie an den örtlich von der Wärmequelle getrennten Wärmeverbraucher anzugeben. Die örtliche Trennung kann auch chemischen, verfahrenstechnischen oder anderen Gründen notwendig sein. Der Wärmeträger kann einmal oder auch, im Kreislauf geführt, wiederholt verwendet werden. Die bei der Wärmeübertragung von der Wärmequelle an den Wärmeträger und vom Wärmeträger an den Wärmeverbraucher sowie die beim Wärmetransport auftretenden Wärmeverluste haben zur Folge, daß die Wärme dem Wärmeverbraucher mit einer niedrigeren Temperatur als der der Wärmequelle zugeführt wird. Beim Wärmetransport auftretende Druckverluste werden durch Umwälzgebläse gedeckt.

Ein weiteres Problem besteht bei derartigen Hochtemperaturprozessen, bei denen z. B. ein chemisches Produkt hergestellt wird, wie Gas aus Kohle, darin, daß der Wärmeträger nach der Wärmeabgabe an den Hochtemperaturprozeß noch eine relativ hohe Temperatur hat, die aus Gründen des Wirkungsgrades heruntergekült werden muß, was z. B. unter Erzeugung von elektrischem Strom geschieht. In solchen Fällen sind die Abgabe des chemischen Produktes der wärmeaufnehmenden Reaktion und die Abgabe elektrischer Energie aus dem Gesamtprozeß also miteinander gekoppelt. Diese Kopplung hat Nachteile für den Betrieb der Gesamtanlage, wenn Wärme und elektrische Energie nicht in der angebotenen Aufteilung und gleichzeitig verbraucht werden.

Man weiß nun, daß beim Verdichten von Gasen deren Temperatur ansteigt und daß zum Verdichten Arbeit aufgewendet werden muß. Es ist ferner bekannt, daß diese Verdichtungsarbeit von einer Gasturbine geleistet werden kann, die vom gleichen Fluid beaufschlagt wird, wie der Verdichter. Es ist schließlich bekannt, daß in einem Wärmepumpen-Prozeß die Temperatur des Wärmeträgergases durch Abfuhr von Wärme zwischen Verdichter und Gasturbine gesenkt wird ; dabei ist die Gastemperatur am Austritt der Gasturbine niedriger als die Verdichtereintrittstemperatur. Weil die Arbeit der Gasturbine allein nicht zum Antrieb des Verdichters ausreicht, muß dem Maschinensatz Arbeit zugeführt werden (DE-A-2 755 092). Bei solchen Wärmepumpen-Prozessen muß jedoch die am Verdichter zu leistende Arbeit auf relativ unwirtschaftliche Weise, nämlich von einer Energiequelle bereitgestellt werden, die auf einem viel höheren Temperaturniveau arbeitet, als es von der Wärmepumpe erreicht wird ; außerdem sind die von Wärmepumpen erreichten Endtemperaturen bekanntlich — entprechend ihrem bisher als sinnvoll angesehenen Einsatzgebiet — relativ niedrig.

Aus der DE-A-2 134 721 ist ein Verfahren zum Betreiben von Kraftwerken ohne Frischwasserzuführung bekannt, bei dem Luft als Wärmeträgerfluid in einem Turbokompressor auf 210 °C erwärmt wird. Nach der nachfolgenden Wärmeabgabe wird die dann noch 10 °C heiße Luft in einer anderen, den Turbokompressor antreibenden Turbine isotherm entspannt. Bei diesem bekannten Verfahren wird das Wärmeträgerfluid weder in einer Wärmequelle vorerhitzt, noch kann damit eine Wärmeabgabe an Hochtemperatur-Prozesse realisiert werden.

Eine andere Wärmepumpe ist schließlich aus der US-A-2 471 123 bekannt, deren zur Luftkühlung erforderlichen Kompressorenenergie zum Teil durch einen Elektromotor bereitgestellt wird. Diese bekannte Wärmepumpe dient in erster Linie als Kältemaschine und ist zur Wärmeabgabe des Wärmeträgerfluids an Hochtemperatur-Prozesse nicht geeignet.

Der Erfindung liegt die Aufgabe zugrunde, bei einem Verfahren der eingangs genannten Art die beschriebenen Nachteile zu beseitigen ; insbesondere ist es anzustreben, die nach der Wärmeabgabe verbleibende Energie von Wärmeträgerfluiden in Hochtemperatur-Prozessen zweckmäßig im gleichen Prozeß zu verwenden, um den Anteil des Koppelproduktes an der Gesamtproduktion zu vermindern oder um die Koppelproduktion ganz zu vermeiden ; und schließlich soll die Wärmeabgabe einer in der Temperatur der Wärmeabgabe nach oben begrenzten Wärmequelle für die Durchführung von Hochtemperatur-Prozessen ohne weitere Wärmeübertragung durch besondere Energiequellen ermöglicht werden.

Diese Aufgabe wird erfindungsgemäß durch die kennzeichnenden Merkmale des Anspruches 1 gelöst. Für die Erfindung ist es also entscheidend, daß — im Gegensatz zu den üblichen Wärmepumpen-

2

prozessen — die höchste in dem Gesamtprozeß erreichte nutzbare Temperatur der Arbeitsfluide von dem Wärmeträgerfluid vor der Wärmeabgabe erreicht wird.

Bevorzugt wird ein von einer in der Temperatur der Wärmeabgabe nach oben begrenzten Wärmequelle auf die begrenze Temperatur erhitzter Wärmeträger (Wärmeträgerfluid) in einem der Wärmequelle nachgeschalteten Verdichter unter Temperaturerhöhung komprimiert, darauf die Wärme an einen wärmeaufnehmenden Prozeß abgegeben und der abgekühlte Wärmeträger in einer Gasturbine entspannt, worauf nach Gewinnung von Arbeit aus der restlichen Wärme des Wärmeträgers in einem Wärmekraftprozeß dieser wieder der Wärmequelle zugeführt wird. Auf diese Weise wird es möglich, Prozeßwärme auf einem zuvor nicht erreichbaren Temperaturniveau anzubieten, ohne daß die Antriebsenergie für die dabei verwendete Wärmepumpe ebenfalls auf einem vergleichbar hohen Niveau angeboten werden muß. Es handelt sich bei der Erfingung also um ein völlig neues, z. B. als « Hochtemperatur-Wärmepumpe » zu bezeichnendes Konzept, bei dem die insgesamthöchste in dem Prozeß auftretende Nutztemperatur von dem Wärmeträgerfluid selbst — vor der Wärmeabgabe — erreicht wird. Der Wirkungsgrad ist besonders hoch, da aus einer vergleichsweise minderwertigen Energie — wegen der relativ geringen Temperatur — mit geringen Umwandlungsverlusten Wärme bei der gewünschten Spitzentemperatur bereitgestellt und an einem Hochtemperaturprozeß mit einem sehr guten Wirkungsgrad übertragen wird. Mit den erfindungsgemäßen Maßnahmen wird insbesondere die angestrebte Minderung des « Koppelproduktes » — Strom — erreicht und der Wirkungsgrad des Gesamtsystemes erhöht.

Eine bevorzugte Ausführungsform der Erfindung besteht darin, daß die in der Temperatur der Wärmeabgabe nach oben begrenzte Wärmequelle aus einer exothermen chemischen oder nuklearen Reaktion besteht und weiterhin, daß der wärmeaufnehmende Prozeß aus einem Kohlevergasungsprozeß besteht. Bevorzugt soll hierzu der Wärmeträger vor der Wärmeabgabe eine Temperatur zwischen 800 und 1 000 °C besitzen.

Durch Kompression des bei der Aufnahme von Wärme aus der Wärmequelle bereits erhitzten gasförmigen Wärmeträgers wird dessen Temperatur und Druck angehoben. Nach der Abgabe von Wärme bei hoher Temperatur aus dem gasförmigen Wärmeträger an den Wärmeverbraucher wird der Druck des weiterhin gasförmigen Wärmeträgers z. B. in einer Expansionsturbine wieder auf den ursprünglichen Wert gesenkt. Bei der Turbinenexpansion gibt der Wärmeträger Arbeit ab. Sie verhält sich zur Verdichtungsarbeit wie die absoluten Temperaturen nach und vor der Wärmeabgabe an den Wärmeverbraucher und ist außerdem noch vom Druckverhältnis des Verdichters und der Expansionsturbine, von deren Wirkungsgraden und von der Art des Wärmeträgers abhängig. Auf diese Weise wird ein — unter Umständen sogar ein wesentlicher — Teil der zum Antrieb des Verdichters notwendigen Leistung von der dem wärmeaufnehmenden Prozeß im Wärmeträgerkreislauf nachgeschalteten Expansionsturbine (Gasturbine) erbracht.

Die Entspannung des Wärmeträgerfluids nach der Wärmeabgabe erfolgt ganz oder zum Teil dadurch, daß es seine restliche Wärme an einen Wärmekraftprozeß abgibt. Bevorzugt erfolgt aber zunächst die Entspannung in einer Gasturbine und nachfolgend die Abgabe der restlichen Wärme.

Erfindungsgemäß wird ein wesentlicher Teil oder — im Zusammenhang mit dem zuvor Gesagten — der restliche Teil der zum Antrieb des Verdichters notwendigen Leitung von einem dem wärmeaufnehmenden Prozeß und der Expansionsturbine im Wärmeträgerkreislauf nachgeschalteten Wärme-Kraft-Prozeß, z. B. einem Dampfkraftprozeß, erbracht. Unter der restlichen Leistung wird die Leistung verstanden, die nicht schon von der mit dem Wärmeträger selbst als Arbeitsfluid beaufschlagten Expansionsturbine erbracht wird.

Nach einer besonderen Ausführungsform sind der Verdichter, die Expansionsturbine und ein Teil der Entspannungsstufen (Kraftstufen) des im Wärmeträgerkreislaufes der Expansions-turbine nachgeschalteten Wärmekraftprozesses — z. B. eines Dampfkraftprozesses — auf einer Welle angeordnet und der Dampfmassenstrom und die Dampfzustandsänderung sind so angepaßt, daß die Maschinengruppe ohne zusätzlichen Antrieb im Leistungsgleichgewicht ist. Dies hat den Vorteil eines besseren Wirkungsgrades und ermöglicht eine freie Wahl der Drehzahl der Welle.

Nach einer weiteren besonderen Asuführungsform ist der Wärmekraftprozeß ein überkritischer Dampfkraftprozeß, d. h. dem in diesem Prozeß eingesetzten Arbeitsfluid wird die restliche Wärme des Wärmeträgers bei Drücken zugeführt, die größer sind als der kritische Druck des betreffenden Arbeitsfluids. Dadurch können die Wärme-Temperatur-Profile des wärmeabgebenden Wärmeträgers und des wärmeaufnehmenden Arbeitsfluids einander besser angepaßt werden als bei unterkritischem Druck im Arbeitsfluid, wodurch die Verluste an Arbeitsfähigkeit (Exergie) bei der Wärmeübertragung vermindert werden. Es kann sich bei dem Dampf (vapour) z. B. um Wasserdampf (steam) handeln. Nach einer weiteren besonderen Ausführungsform erfolgt bei mehrsträngiger Ausführung des Wärmeträgerkreislaufes die restliche Entspannung im Dampfkraftprozeß aus einer Dampfsammelleitung heraus in einem gemeinsamen Mittel- und/oder Niederdruckteil, die einen Generator antreiben.

Im Bedarfsfalle wird der Hochdruckteil des Wärmekraftprozesses oder werden — bei Durchführung des erfindungsgemäßen Verfahrens in einer Anlage mit mehreren parallel betriebenen Wärmeträgerkreisläufen — zumindest einige der Hochdruckteile zum Anfahren aus dem Stillstand mit Fremddampf versorgt.

Nach einer besonderen Ausführungsform des Verfahrens wird Teillastbetrieb dadurch eingestellt, daß ein Teilstrom des Wärmeträgers durch Umführungen an der Expansionsturbine und/oder anderen Anlagenteilen vorbeigeleitet wird. Teillastbetrieb kann auch dadurch eingestellt werden, daß der Basisdruck im Wärmeträgerkreislauf abgesenkt und damit der umlaufende Massenstrom vermindert wird (« Druckpegelregelung »).

Gemäß einer allgemeinen Ausführungsform läuft das erfindungsgemäße Verfahren wie folgt ab : Aus einer Wärmequelle wird in einem Wärmeüberträger Wärme an den gasförmigen Wärmeträger übertragen. Beim Verdichten des gasförmigen Wärmeträgers in einem Hochtemperaturverdichter werden durch Zufuhr von Arbeit die Temperatur und der Druck des Wärmeträgers erhöht. In einem nachgeschalteten Wärmeübertrager wird die Wärme aus dem Wärmeträger an den wärmeverbrauchenden Prozeß übertragen.

In einer nachgeschalteten Expansionsturbine wird der zuvor in dem Hochtemperaturverdichter erhöhte Druck des Wärmeträgers unter Abgabe von Arbeit wieder auf den ursprünglichen Wert gesenkt.

Die nach Austritt aus der Expansionsturbine noch im gasförmigen Wärmeträger verfügbare Wärme wird in einem Wärme-Kraft-prozeß genutzt. Die Temperatur des Wärmeträgers sinkt dabei auf den ursprünglichen Wert ab. Der Wärmeträger wird erneut dem Wärmeübertrager der Wärmequelle zugeführt, womit der Wärmeträgerkreislauf geschlossen ist.

Wie schon ausgeführt wurde, ist zum Antrieb des Hochtemperaturverdichter-Expansionsturbinen-Satzes Arbeit aufzuwenden. Diese wird zu einem Teil von dem Wärme-Kraft-Prozeß geliefert. Durch geeignete Auslegung des Gesamtprozesses kann erreicht werden, daß insgesamt keine Arbeit mehr zu- oder abgeführt wird.

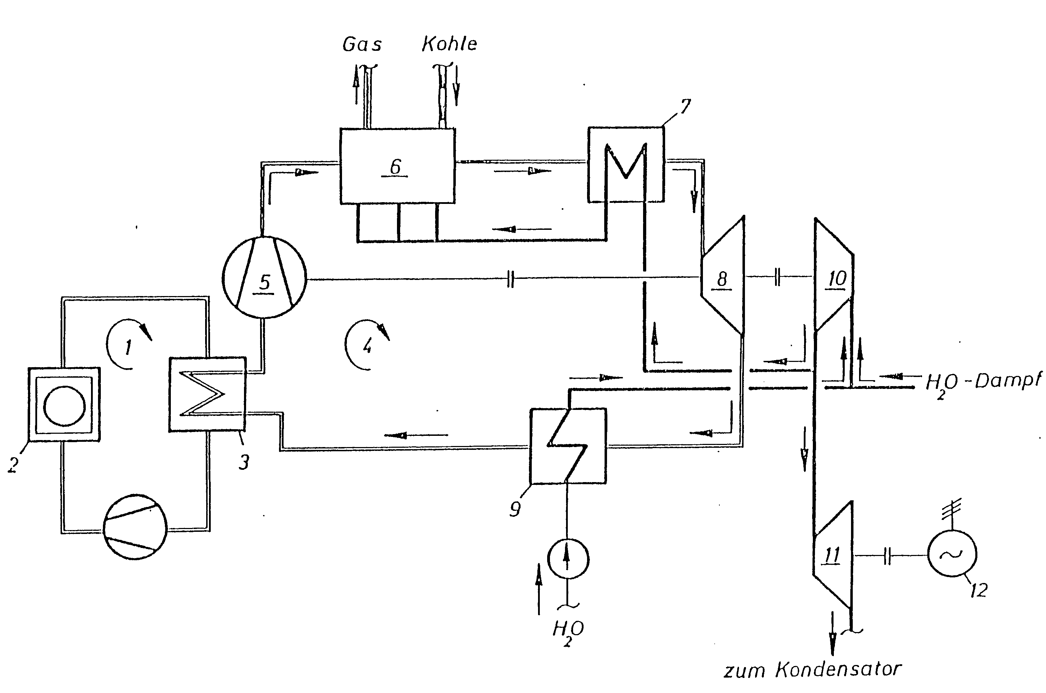

Weitere Ziele, Merkmale, Vorteile und Anwendungsmöglichkeiten der vorliegender Erfindung ergeben sich aus der nachfolgenden Beschreibung eines bevorzugten Ausführungsbeispieles anhand der beiliegenden Zeichnung.

Die Zeichnung zeigt :

ein Fließschema eines geschlossenen Wärmeträgerkreislaufes mit einem nuklearen Hochtemperaturreaktor als Wärmequelle und einem Wasserdampf-Kohle-Vergasungsprozeß als Wärmeverbraucher im Rahmen einer Gesamtanlage

Aus dem Primärkreislauf 1 eines heliumgekühlten Hochtemperaturreaktors 2 wird in einem Wärmeübertrager 3 Wärme an Helium als Wärmeträger im Sekundärkreislauf 4 übertragen. Das derart auf eine begrenzte Temperatur erwärmte Wärmeträgerfluid wird in einem Verdichter 5 komprimiert, um seine Temperatur weiter anzuheben.

In einer Vergasungs-Vorrichtung 6 wird unter Zugabe von Vergasungs- und Fluidisierungsdampf Kohle vergast. Die Vergasung findet im Wirbelbett statt ; die für die Reaktion der Kohle mit dem Wasserdampf benötigte Wärme wird dem Wärmeträger Helium entzogen, das durch tauchsiederartig ins Wirbelbett eintauchende Rohrbündel strömt und sich dabei abkühlt.

Der Vergasungs- und Fluidisierungsdampf wird im Dampfüberhitzer 7 überhitzt, bevor er in die Vergasungsvorrichtung 6 eintritt. Die zur Überhitzung notwendige Wärme wird aus dem Wärmeträger Helium an den Dampf übertragen. Das Helium wird in einer Expansionsturbine 8 auf einen Druck entspannt, der um die Druckverluste im anschließend durchströmten Dampferzeuger 9, im erwähnten Wärmeübertrager 3 und den verbindenden Rohrleitungen größer ist als der Druck am Eintritt des Verdichters 5.

Wegen der Wärmeabgabe in der Vergasungs-Vorrichtung 6 und im Prozeßdampfüberhitzer 7 ist die Temperatur des Heliums am Eintritt in die Expansionsturbine 8 so weit abgesunken, daß deren Leistung allein nicht ausreicht, um den Verdichter 5 anzutreiben. Die restliche Leistung wird von einer Dampfturbine 10 erbracht, die mit Dampf aus dem erwähnten Dampferzeuger 9 beaufschlagt wird. Zusätzlich wird ihr Dampf aus der Nutzung der fühlbaren und der bei chemischer Umwandlung (Methanisierung) des im Vergaser 6 erzeugten Gases freigesetzten Wärme zugeführt.

Am Austritt der Dampfturbine 10 wird ein Teilstrom des Dampfes abgezweigt ; dieser Vergasungs- und Fluidisierungs-dampf strömt zum erwähnten Überhitzer 7.

Die verbleibende Dampfmenge entspannt in einer Mitteldruck- und Niederdruckturbine 11 weiter auf den Kondensatordruck und leistet dabei Arbeit zum Antrieb des Generators 12.

Das Kondensations- und das Speisewassersystem sind nicht dargestellt, weil hierfür bekannte Verfahrensschritte eingesetzt werden. Auch nicht eingezeichnet ist die zum Ausgleich der Dampf-Massenbilanz notwendige Einspeisung von Zusatzwasser.

Bei mehrsträngiger (« Mehr-Loop- ») Ausführung des Zwischenkreislaufes 4 entspricht die Anzahl der Anlagenteile 3, 5, 7, 8, 9 und 10 der Anzahl der Stränge. Die Zuordnung einer oder auch mehrerer Vergasungsvorrichtungen 6 zu den Strängen erfolgt nach Abwägung technischer und wirtschaftlicher Gesichtspunkte. Die Anlagenteile 11 und 12 können auch in diesem Falls als Einzelapparate- und maschinen ausgelegt sein.

Folgende Drücke, Temperaturen, Massenströme und Leistungen wurden bei der rechnerischen Auslegung für ein Ausführungsbeispiel des dargestellten Prozesses ermittelt :

Primärkreislauf 1 im Hochtemperaturreaktor 2

Fluid : Helium

4

Temperatur/Druck :
   vor Reaktor ca. 300 °C/ca. 40 bar
   nach Reaktor ca. 960 °C/ca. 40 bar
Leistung : ca. 3 000 MW
Massenstrom : 875 kg/s

Wärmeübertrager 3

Fluid : Helium/Helium
Temperatur/Druck :
   primärseitig ein ca. 950 °C/39,9 bar
   primärseitig aus ca. 290 °C/39,3 bar
   sekundarseitig ein ca. 240 °C/43,5 bar
   sekundarseitig aus ca. 900 °C/41,9 bar
Anzahl Einheiten : 6

Sekundärkreislauf 4

Fluid : Helium
6 Stränge mit je 2 Vergasungs-Vorrichtungen
Massenstrom : je Strang 145,8 kg/s ; insg. 875 kg/s

Verdichter 5

Fluid : Helium
Temperatur/Druck :
   am Eintritt 900 °C/41,9 bar
   am Austritt 1 000 °C/49,8 bar
Leistung an der Kupplung : je Einheit 77,3 MW ; insg. 463,8 MW

Vergasungs-Vorrichtung 6

Fluid : Helium/fluidisiertes Kohle-Wasserdampf-Gas-Gemisch
Temperatur/Druck :
   heliumseitig ein 1 000 °C/49,8 bar
   heliumseitig aus 860 °C/49,4 bar
   dampfseitig ein 850 °C/48 bar
   wirbelschichtseitig 845 °C/43 bar
   gasseitig aus 845 °C/43 bar
Massenströme :
   Kohle
      je Vergasereinheit 10,93 kg/s
      insgesamt 131,2 kg/s
   Prozeßdampf
      je Einheit 53,46 kg/s
      insgesamt 641,5 kg/s
   Rohgas
      je Vergasereinheit 80,5 $m_n^3$/s
      insgesamt 965,6 $m_n^3$/s
Leistung : (dem He entzogen)
   je Vergasereinheit 53,2 MW
   insgesamt 638,6 MW

Prozeßdampfüberhitzer 7
Fluid : Helium/Wasserdampf
Temperatur/Druck :
   heliumseitig ein 859,5 °C/49,35 bar
   heliumseitig aus 715,1 °C/48,84 bar
   dampfseitig ein 415,0 °C/52 bar
   dampfseitig aus 849,5 °C/50 bar
Dampfmassenstrom :
   je Strang 106,9 kg/s
   insgesamt 641,5 kg/s
Leistung : (dem He entzogen)
   je Strang 109,5 MW

insgesamt 656,9 MW

Expansionsturbine 8
Fluid : Helium
Temperatur/Druck :
   am Eintritt 715,1 °C/48,84 bar
   am Austritt 681,4 °C/44,15 bar
Massenstrom :
   je Einheit 145,8 kg/s
   insgesamt 875 kg/s
Leistung : (an der Kupplung)
   je Einheit 25,1 MW
   insgesamt 150,4 MW

Dampferzeuger 9

Fluid : Helium/Wasserdampf
Temperatur/Druck :
   heliumseitig ein 681,2 °C/44,15 bar
   heliumseitig aus 240 °C/43,55 bar
   dampfseitig ein 167,9 °C/125 bar
   dampfseitig aus 540 °C/115 bar
Dampfmassenstrom :
   je Einheit 121,9 kg/s
   insgesamt 731,25 kg/s
Leistung :
   je Einheit 334,3 MW
   insgesamt 2 005,5 MW

HD-Dampfturbine 10

Fluid : Wasserdampf
Temperatur/Druck :
   am Eintritt 540 °C/115 bar
   Entnahme bei 415 °C/52 bar
   am Austritt 372 °C/38,48 bar
Massenstrom :
   je Strang 200,75 kg/s
   insgesamt 1 204,5 kg/s
   Entnahme je Strang 106,92 kg/s
   Entnahme insgesamt 641,52 kg/s
Leistung :
   je Einheit 52,24 MW
   insegesamt 313,4 MW

MD-ND — Dampfturbine 11 und Generator 12

Fluid : Wasserdampf
Temperatur/Druck :
   am Eintritt 372 °C/38,44 bar
   erste Anzapfung und Einspeisung von Dampf aus Nutzung der Rohgaswärme
   und chemische Umwandlung bei 4,89 bar
   zweite Anzapfung bei 1,0 bar
   am Austritt x = 0,88/0,1 bar
Massenstrom :
   Eintritt bis erste Anzapfung 536,4 kg/s
   Anzapf-/Einspeisestelle bis zweite Anzapfung 890,6 kg/s
   zweite Anzapfung bis Austrit 845,5 kg/s
Leistung : Generator 12 588,3 MW

Leistungsbilanz

(1) Elektrische Leistung

Generator 12                                     588,3 MW

davon ab :

| | |
|---|---|
| Kondensatpumpen | 0,84 MW |
| Speisepumpe | 13,29 MW |
| Eigenbedarf HTR | 92,7 MW |
| Eigenbedarf Gasfabrik | 60 MW |
| Eigenbedarf Dampfanlage | 40 MW |
| | 206,83 MW −206,83 MW |
| | Nettostrom : 381,47 MW |

(2) Gaserzeugung

| | |
|---|---|
| Rohgasmassenstrom | 965,6 $m_n^3$/s |
| daraus nach Trocknung, Reinigung und chemischer Unwandlung (Methanisierung) SNG-Massenstrom | 111,6 $m_n^3$/s |
| Energiestrom im SNG ($H_0$ = 890 MJ/kmol) | 4 431,3 MW |

(3) Eingesetzte Kohle

| | |
|---|---|
| Massenstrom | 131,2 kg/s |
| Energiestrom Kohle ($H_0$ = 28,7 MJ/kg) | 3 765,4 MW |

(4) Kernenergie
Reaktorleistung

3 000 MW

(5) Umwandlungsgrad

$$\frac{\text{SNG} - \text{Energie} + \text{elektrische Leistung}}{\text{Reaktorleistung} + \text{Energie Kohle}} = 71,1\ \%$$

**Patentansprüche**

1. Verfahren zur Bereitstellung von Wärme unter Verwendung einer Wärmepumpe, bei der
1. ein Wärmeträgerfluid
1.1. von einer Wärmequelle erhitzt und
1.2. in einem der Wärmequelle nachgeschalteten Verdichter unter Temperaturerhöhung komprimiert wird,
1.3. es darauf Wärme an einen wärmeaufnehmenden Prozeß abgibt (Wärmeabgabe) und
1.4. nachfolgend in einer einen Teil der Verdichtungsenergie erbringenden Gasturbine entspannt wird, dadurch gekennzeichnet, daß
2. die Wärmeabgabe an einen nur bei Temperaturen oberhalb von etwa 800 °C ablaufenden Prozeß auf einer Temperatur oberhalb von etwa 800 °C erfolgt und
3. die zum Antrieb des Verdichters insgesamt aufzubringende Arbeit
3.1. im wesentlichen aus der thermischen Energie eines gasförmig bleibenden Wärmeträgerfluids erbracht wird, die nach der Wärmeabgabe noch zur Verfügung steht, indem das Wärmeträgerfluid nach der Wärmeabgabe seine restliche Wärme an einen Wärme-Kraft-Prozeß abgibt und die zum Antrieb des Verdichters aufzubringende Arbeit von dem Wärme-Kraft-Prozeß erbracht wird und
3.2. im übrigen aus der von dem oberhalb von etwa 800 °C ablaufenden Prozeß abgegebenen Wärmeenergie, die bei einer Temperatur unterhalb der Temperatur der Wärmeabgabe zur Verfügung steht, erbracht wird.
2. Verfahren nach Anspruch 1, dadurch gekennzeichnet, daß die Wärmequelle aus einer exothermen chemischen oder nuklearen Reaktion besteht.
3. Verfahren nach Anspruch 1 oder 2, dadurch gekennzeichnet, daß der wärmeaufnehmende Prozeß aus einem Kohlevergasungsprozeß besteht.
4. Verfahren nach einem der Ansprüche 1 bis 3, dadurch gekennzeichnet, daß der Verdichter, die Gasturbine und ein Teil der Entspannungsstufen (Kraftstufen) des Wärmekraftprozesses auf einer Welle angeordnet und ohne zusätzlichen Antrieb im Leistungsgleichgewicht sind.
5. Verfahren nach Anspruch 4, dadurch gekennzeichnet, daß die restliche Entspannung in einem Dampfkraftprozeß aus einer Dampfsammelleitung heraus in einem gemeinsamen Mittel- und/oder Niederdruckteil erfolgt, die einen Generator antreiben.
6. Verfahren nach einem der Ansprüche 1 bis 5, dadurch gekennzeichnet, daß der Wärmekraftprozeß ein überkritischer Dampfkraftprozeß ist.
7. Verfahren nach einem der Ansprüche 1 bis 6, dadurch gekennzeichnet, daß in dem Wärmekraftprozeß unter anderem ein Hochdruckteil vorgesehen ist und dieser zum Anfahren mit Fremddampf versorgt wird.

**0 039 907**

8. Verfahren nach einem der Ansprüche 1 bis 7, dadurch gekennzeichnet, daß ein Teillastbetrieb eines oder mehrerer der Anlagenteile durch Umführung zumindest eines Teiles des Wärmeträgerfluids eingestellt wird.

## Claims

1. A method of generating heat by using a heat pump, in which
1. a heat carrier fluid
1.1. is heated by a heat source and
1.2. is compressed in a compressor arranged downstream of the heat source while the temperature is increased,
1.3. it thereupon gives off heat to a heat-absorbing process (heat loss) and
1.4. it is subsequently expanded in a gas turbine which produces part of the compression energy, characterized in that
2. the heat loss to a process taking place only at temperatures above approximately 800 °C occurs at a temperature above approximately 800 °C and
3. the energy to be applied as a whole in order to drive the compressor
3.1. is produced substantially from the thermal energy of a heat carrier fluid which remains gaseous which energy is still available after the heat loss, in that after the heat loss the heat carrier fluid gives off its residual heat to a heat power process and the energy to be applied in order to drive the compressor is produced by the heat power process and
3.2. is also produced from the heat energy which is given off by the process taking place above approximately 800 °C and which is available at a temperature below the temperature of the heat loss.

2. A method according to claim 1, characterized in that the heat source comprises an exothermic chemical or nuclear reaction.

3. A method according to claim 1 or 2, characterized in that the heat-absorbing process comprises a coal gasification process.

4. A method according to any one of claims 1 to 3, characterized in that the compressor, the gas turbine, and part of the expansion stages (power stages) on the heat power process are mounted on one shaft and without additional drive are in power equilibrium.

5. A method according to claim 4, characterized in that the residual expansion takes place in a common medium- and/or low-pressure component driving a generator in a steam power process from a steam collection line.

6. A method according to any one of claims 1 to 5, characterized in that the heat power process is an supercritical steam power process.

7. A method according to any one of claims 1 to 6, characterized in that a high-pressure component *inter alia* is provided in the heat power process and the said component is supplied with external steam for starting purposes.

8. A method according to any one of claims 1 to 7, characterized in that partial-load operation of one or more of the components of the plant is set by by-passing at least part of the heat carrier fluid.

## Revendications

1. Procédé de production de chaleur avec utilisation d'une pompe de chaleur, dans lequel
1. un fluide caloporteur
1.1. est chauffé par une source de chaleur,
1.2. est comprimé avec élévation de la température dans un compresseur disposé en aval de la source de chaleur,
1.3. cède de la chaleur dans un procédé absorbant des calories (cession de chaleur), puis
1.4. est détendu dans une turbine à gaz qui produit une partie de l'énergie de compression, caractérisé en ce que
2. la cession de chaleur n'est effectuée qu'à une température supérieure à environ 800 °C à un procédé ne se déroulant qu'à des températures supérieures à environ 800 °C et
3. la totalité du travail nécessaire pour le fonctionnement du compresseur provient
3.1. pour l'essentiel de l'énergie thermique résiduelle du fluide caloporteur maintenu à l'état gazeux, après la cession de chaleur, cette chaleur résiduelle étant cédée par le fluide caloporteur à un processus chaleur-force, qui produit le travail nécessaire au fonctionnement du compresseur, et
3.2. pour le reste de l'énergie thermique cédée par le procédé se déroulant à une température supérieure à environ 800 °C et disponible à une température inférieure à la température, à laquelle a lieu la cession de chaleur.

2. Procédé suivant la revendication 1, caractérisé en ce que la source de chaleur est constituée d'une réaction chimique ou nucléaire exothermique.

3. Procédé suivant la revendication 1 ou 2, caractérisé en ce que le procédé absorbant de la chaleur est un procédé de gazéification de charbon.

4. Procédé suivant l'une des revendications 1 à 3, caractérisé en ce que la turbine à gaz et une partie des étages de détente (étages de force) du processus chaleur-force sont disposées sur un arbre commun et sont en équilibre de puissance sans entraînement additionnel.

5. Procédé suivant la revendication 4, caractérisé en ce que la détente finale est réalisée dans un processus moteur à vapeur avec un étage moyenne pression et(ou) un étage basse pression communs, reliés à une conduite collectrice de la vapeur et entraînant un générateur.

6. Procédé suivant l'une des revendications 1 à 5, caractérisé en ce que le processus chaleur-force est un processus à vapeur hypercritique.

7. Procédé suivant l'une des revendications 1 à 6, caractérisé en ce que le processus chaleur-force comporte aussi un étage haute pression, qui est mis en route par l'introduction d'un gaz extrinsèque.

8. Procédé suivant l'une des revendiations 1 à 7, caractérisé en ce qu'un fonctionnement sous charge partielle est réglé par la déviation d'au moins une fraction du fluide caloporteur.

Gas  Kohle

H₂O-Dampf

H₂O

zum Kondensator

0 039 907